# EUROPEAN PATENT SPECIFICATION

(11) **EP 3 652 090 B1**
(45) Date of publication and mention of the grant of the patent: **04.12.2024**
(21) Application number: 18749184.0
(22) Date of filing: 10.07.2018
(51) Int. Cl.: B65D 85/804, A47J 31/36

(54) **CAPSULE AND SYSTEM FOR PREPARING A BEVERAGE**
KAPSEL UND SYSTEM ZUR ZUBEREITUNG VON GETRÄNKEN
CAPSULE ET SYSTÈME DE PRÉPARATION D'UNE BOISSON

(30) Priority: 10.07.2017 NL 2019220; 02.02.2018 NL 2020374
(43) Date of publication of application: 20.05.2020
(73) Proprietor: Koninklijke Douwe Egberts B.V., 3532 AD Utrecht (NL)
(72) Inventor: ANDREWS, Richard John, 3532 AD Utrecht (NL); DE GRAAFF, Gerbrand Kristiaan, 3532 AD Utrecht (NL); ALDERSON, Paul, 3532 AD Utrecht (NL); SOLANO BERMEJO, Christian, 3532 AD Utrecht (NL)
(74) Representative: V.O.
(86) International application number: PCT/NL2018/050460
(87) International publication number: WO 2019/013623

(56) References cited:
- WO-A1-03/073896
- DE-A1- 102013 215 274
- US-A1- 2012 070 543
- US-A1- 2014 161 936
- US-A1- 2017 086 471

## Description

### FIELD OF THE INVENTION

The invention relates to a capsule for preparing a beverage comprising a substantially rigid capsule body having a circumferential wall extending around an inner space of the capsule which is at least partially filled with a beverage ingredient suitable for preparing the beverage such as coffee, and a base wall covering the inner space at a first end of the circumferential wall, the capsule comprising a lid covering the inner space at a second end of the circumferential wall opposite the base wall.

### BACKGROUND OF THE INVENTION

Such capsules for preparing a beverage are generally known from the prior art for use in a beverage preparation device wherein in a brewing chamber of the device liquid is injected in the capsule to extract the beverage from an extractable ingredient, usually roasted and ground coffee, contained within an inner space of the capsule.

In most of the known capsules the inner space of the capsule is hermetically or fluid-tightly closed from the environment prior to use in the beverage preparation device in order to maintain or prolong a freshness of the beverage ingredient during storage. The capsule hereto often comprises a substantially rigid capsule body having a circumferential wall extending around the inner space and a base wall covering the inner space at a first end of the circumferential wall. At a second end of the circumferential wall opposite the base wall the capsule body has an open filling side. A fluid tight lid is provided over the open filling side of the capsule body to cover the inner space. In use the capsule may be pierced, preferably at the base wall and/or the lid, to form an injection opening for injecting the liquid such as hot water, and/or to form an outlet opening which allows the prepared beverage to escape the capsule.

Many of the known capsules are particularly for preparing an espresso beverage wherein the injection of pressurized hot water in the capsule leads to an extraction of substances from the coffee beverage ingredient and with foam forming on the beverage corresponding to an espresso beverage with a crema layer as obtained with known piston type espresso machine using high pressure brewing.

For a crema-free coffee beverage, for example a coffee beverage without foam, also referred to as brewed coffee, usually apparatuses are used in which the beverage is prepared by unpressurized filtration of a mixture of beverage ingredient and water.

Also a tea beverage is usually prepared by unpressurized filtration of a mixture of beverage ingredient and water. The same applies to beverages prepared from soluble base products, or combinations of extractable and soluble base products.

There is however a need for capsules and systems with which such beverages like a crema-free coffee based beverage may be prepared in pressurized beverage preparation devices.

It is therefore an object of the invention to provide a capsule for preparing a crema-free coffee based beverage.

It is a further object of the invention to provide a system comprising a beverage preparation device and a capsule for preparing a crema-free coffee based beverage.

A particular object of the present invention is to provide such system and capsule for producing a crema-free coffee based beverage which has improvements over systems and capsules of the prior art. The crema-free coffee based beverage obtained by the capsule and the system is preferably in quality similar to or improved as compared to crema-free coffee based beverages prepared in prior art unpressurized filtration type of preparation apparatuses, particularly as perceived by the general public.

Another object of the invention is to provide a method of manufacturing a capsule suitable for preparing a crema free coffee based beverage.

Capsules filled with a beverage ingredient and comprising a membrane or filter are known from the prior art, e.g. US 2012/070543 A1, WO 03/073896 A1, DE 10 2013 215274 A1, and US 2017/086471 A1. For example, US 2012/070543 discloses, in §12, §59, §60 and claim 2, a capsule with a filter element with a non-woven material having a mass between 40 - 100 g/m², a thickness between 0.2 and 0.8 mm and an air permeability between 1000 and 3000 L/(m² s) at 100 Pa, to prevent crema formation (§10, §12, §16 and §73).

### SUMMARY OF THE INVENTION

For that purpose, the invention provides a capsule as described herein. Also, the invention provides a system as described herein. Furthermore, the invention provides a method as described herein. Specific embodiments of the invention are described herein. The objects are achieved by the present invention, i.e. a capsule, and a system.

The capsule for preparing a crema-free coffee based beverage according to the invention comprises a substantially rigid capsule body having a circumferential wall extending around an inner space of the capsule which is at least partially filled with a beverage ingredient suitable for preparing the beverage, the beverage ingredient comprising roast and ground coffee, and a base wall covering the inner space at a first end of the circumferential wall, the capsule comprising a lid covering the inner space at a second end of the circumferential wall opposite the base wall, wherein a membrane is provided in the inner space of the capsule between the beverage ingredient and the lid, wherein the lid is provided with a preformed outlet opening suitable for draining the prepared beverage from the inner space when the capsule is used in a beverage preparation device, wherein the membrane extends at least over the surface of the outlet opening, which outlet opening is fluid tightly closed by a removable cover element extending over at least part of the lid, wherein the membrane comprises a layer of non-woven material, characterized in that said layer has a thickness in the range of 1.1 to 1.8 mm, an air permeability in the range of 100-700 mm/s at 200 Pa and a weight in the range of 300-600 g/m², wherein the capsule body, the lid, and the cover element are each mainly made from aluminum. In prior art capsules the injection of water in the closed inner space leads to a build up of pressure until an outlet or outflow opening is created, e.g. by piercing the capsule body or lid or by a bursting open of part of the capsule body or lid under the build up pressure. The high brewing pressure prior to forming of an outflow opening results in more crema-forming compounds being extracted when an extractable ingredient is provided in the capsule. In addition to the pressure build up, the sudden pressure drop after creation of an outflow opening contributes to the formation of foam in the prepared beverage. The preformed outlet opening in the lid of the capsule according to the invention allows in use of the capsule in a beverage preparation device continuous escape of the prepared beverage from the capsule while water is injected. Accordingly the pressure build up and pressure drop at the outlet side of the prior art capsules which contribute to formation of a crema-layer are prevented in the capsule according to the invention. Thus the capsule of the invention is suitable for preparation in a pressurized beverage preparation device of a beverage having a reduced or no crema-layer. The preformed outlet opening in the lid is closed by the cover element in order to keep a hermetic sealing of the inner space of the capsule for maintaining or prolonging a freshness of the beverage ingredient in the capsule during storage. Prior to use in the beverage preparation device the cover element may be easily removed to free the outlet opening, for instance by manually tearing the cover element from the capsule. The preformed outlet opening is further covered by the membrane inside the inner space, which membrane may act as a filter to prevent solid particles of the beverage ingredient, for instance coffee grinds, from escaping the inner space through the outlet opening.

In a preferred embodiment of the capsule according to the invention the cover element is attached to the lid. For instance the cover element may be attached to a section of the lid surrounding the preformed outflow opening. As such the cover element may be sized to just cover the outflow opening without having to extend over the larger open filling side. This provides a saving on material costs. Additionally the lid and cover element may be conveniently premanufactured as an assembly which assembly can be attached to the capsule body in a single step, for instance by attaching the lid provided with the cover element to the end of the side wall. Also, when the lid has not yet been attached to the capsule body wherein it extends over the open filling side, it is easier to handle for attachment of the cover element to the lid in a correct manner over the preformed outflow opening. For instance the lid prior to attachment to the capsule body may be supported on a side in use facing the inner space to allow a force being exerted on the opposite side of the lid for attachment of the cover element, e.g. by applying a pressure step.

In a particular embodiment of the capsule according to the invention between the cover element and the lid a layer of adhesive material is provided suitable for a removable adhesion of the cover element to the lid. Particularly a suitable adhesive material may be selected in dependence on the materials used for the cover element and lid, wherein an adhesion strength between the cover element and lid is sufficient to keep the lid and cover element attached under normal circumstances while being easily overcome when a user applies a manual removal force on the cover element. The adhesive material is in a further particular embodiment of the capsule according to the invention a heat-seal lacquer. The lacquer may be used to obtain a suitable attachment with desired adhesion strength between the cover element and lid by heat and pressure bonding. The lacquer may be applied by a lacquering step either to an attachment surface of the lid or, preferably, an attachment surface of the cover element.

In a further preferred embodiment of the capsule according to the invention an adhesion strength between the layer of adhesive material and cover element is weaker than an adhesion strength between the layer of adhesive material and the lid. As such when the cover element is removed, e.g. by tearing of the cover element, the cover element will under normal circumstances tear away at the interface between the adhesive layer and the cover element thus maintaining an integrity of the capsule lid at all times. A determined outflow rate of the prepared beverage from the capsule through the preformed outlet opening with particular dimensions is hereby not affected.

In a further particular embodiment of the capsule according to the invention the layer of adhesive material is provided on a surface part of the cover element extending over the lid with a part of the cover element extending over the outlet opening in the lid being substantially free of adhesive material. The contents of the inner space, i.e. the beverage ingredient and extracted beverage, are herein not exposed to the adhesive material.

In a further preferred embodiment of the capsule according to the invention the lid with a circumferential edge portion thereof is attached to the capsule body. The lid may conveniently be glued, welded or otherwise attached to the capsule body, for example to the end of the side wall thereof.

The membrane provided between the beverage ingredient and the lid according to the invention comprises a layer of non-woven material adapted to minimize formation of a crema layer. Particularly a weight, thickness and air permeability of the layer of non-woven material may be selected, preferably in dependence on each other, such to provide the layer with desired filtering capabilities for removing any crema forming components from the extracted liquid in the capsule. The membrane has a thickness of the layer in the range of 1.1 to 1.8 mm or 1.2-1.6 mm and the air permeability of the layer in the range of 100 - 700 mm/s measured at 200 Pa according to DIN and ISO 9237, and a weight of the layer in the range of 300-600 g/m2. A capsule according to the invention having such a membrane can be used for preparing a coffee beverage which does not or almost does not comprise crema. In particular a lungo or double lungo of brewed coffee can be prepared with such a capsule.

The membrane may be provided loosely, unattached, in the inner space, wherein the membrane may rest on the beverage ingredient provided in the capsule. Alternatively the membrane may be attached with a circumferential edge portion to the capsule body. However, in a preferred embodiment of the capsule according to the invention the membrane is attached to the lid. Accordingly the membrane may be conveniently preassembled with the lid, and possible also with the cover element, prior to the attachment of such assembly to the capsule body for closing the open filling side. In the preassembly of the membrane and lid a correct alignment of the membrane with respect to the outlet hole may be easily achieved so that the entire outlet hole area may be covered with the membrane.

The membrane and lid in a particular embodiment of the capsule according to the invention may be attached by means of a layer of adhesive material, preferably a heat-seal lacquer. The heat-seal lacquer may be applied with a lacquering step to either the membrane or, preferably, the lid.

According to the invention the lid substantially consists of a sheet like layer of aluminum. The outlet opening may be provided in the lid by any appropriate means and method, such as punching or cutting one or more holes in the sheet with desired dimensions. The outlet opening is preferably provided in a central portion of the lid. In an alternative embodiment the outlet opening can be created at the moment of removing the removable cover element by the consumer. For example, the lid can comprise a perforation, preferably in a middle lid outlet region, which becomes exposed by removing the removable cover element. Alternatively, the lid can be provided with a material weakness, for example created by a laser scoring or a micro cut (e.g. like a partial cut used to make labels), preferably in a middle lid outlet region, which material weakness opens upon removal of the removable cover element thereby creating a perforation. As a further alternative the perforation can be provided in one or more layers in a laminate structure and remain in place with lamination adhesive, only being exposed on removing the removable cover element.

The preformed outlet opening in the lid is preferably circular. The preformed outlet opening in the lid may have a diameter of between 6 - 20 mm as an outlet opening with such diameter provides a sufficient exit area in the lid for the brewed beverage to escape the capsule without forming a substantial crema layer. Preferably the diameter of the outlet opening is between 8 - 14 mm. An outlet opening with a diameter of 12 mm is most preferred.

In another preferred embodiment of the capsule according to the invention the lid comprises on a side facing the cover element a layer of protective lacquer. The protective lacquer further supports a strength of the lid, and particularly protects an integrity thereof when the cover element is removed.

The cover element in a further preferred embodiment of the capsule according to the invention comprises a laminate of at least an aluminum layer and a plastic layer, preferable PE. The aluminum layer may be on a side of the cover element facing away from the capsule to provide the cover element a same feel when touched and aesthetic finish as the lid and capsule body made of aluminum. The PE layer may be on an opposite side of the cover facing the lid, which allows for application of a heat-seal lacquer thereto with a bond strength between the lacquer and PE layer being lower than a bond strength of the lacquer to the aluminum lid when the cover element is attached to the lid.

The cover element in another particularly preferred embodiment of the capsule according to the invention comprises a pull tab protruding from part of the cover element covering the outflow opening. At least a free end part of the pull tab opposite the end connected to the part of the cover element covering the outflow opening may be left unattached to the lid, so that a user may manually grasp the unattached part of the pull tab in order to easily remove the cover element from the lid by tearing the cover element off. The pull tab may to this end have any suitable size, e.g. length and thickness, and form for supporting a quick and easy removal of the cover element. Desired properties for the pull tab in order to remove the cover element from the lid will generally be known to the skilled person. Preferably at least part of the pull tab is angled with respect to a surface of the lid facing the cover element in order to allow for a more easy gripping of the pull tab by a user.

According to the invention, the capsule body, the lid, and the cover element are each mainly made from aluminum.

In a further particular embodiment of the capsule according to the invention the beverage ingredient in the inner space comprises an extractable product, namely roast and ground coffee.

In a further particular embodiment of the capsule according to the invention the beverage ingredient in the inner space comprises a soluble product, such as instant coffee, instant tea, instant milk or chocolate product, in combination with an extractable product such as roast ground coffee.

In a further particular embodiment of the capsule according to the invention the beverage ingredient in the inner space comprises ground coffee in an amount of between 7-12 grams. Such a relatively large amount of ground coffee in the capsule allows for the preparation of a lungo or double lungo type of brewed coffee beverage without crema layer which has good organoleptic properties and sensory quality. Such a relatively large amount of ground coffee may for instance be provided in a particular embodiment of the capsule according to the invention with the capsule body having a relatively large size with relatively large inner space. For example the capsule according to the invention may have an inner space with a height dimension between the base wall and the lid of between approximately 30-45mm, preferably between 38-42mm, and a diameter of the inner space at the second end of the circumferential wall being approximately between 40-45mm, preferably between 41-43mm.

In another particular embodiment of the capsule according to the invention the beverage ingredient in the inner space comprises ground coffee in an amount of between 4-7 grams. Such amount of ground coffee in the capsule is particularly suitable for a faster preparation of a crema free coffee beverage of smaller volume, but with good organoleptic properties and sensory quality. Such an amount of ground coffee may for instance be provided in a particular embodiment of the capsule according to the invention with the capsule body having a relatively regular or smaller size with relatively regular or smaller inner space. For example in another particular embodiment of the capsule according to the invention the capsule has an inner space with a height dimension between the base wall and the lid in the order of approximately 26-30 mm, preferably between 28 - 29mm and a diameter of the inner space at the second end of the circumferential wall being approximately between 34 - 40mm, preferably between 36-38mm. Preferably, in this particular embodiment, the diameter of the outlet opening may be 12 mm or less, more preferably between 8 - 12 mm.

The system for preparing a beverage according to the invention comprises an exchangeable capsule and a beverage preparation device with a fluid dispensing device for feeding an amount of a fluid, such as water, under pressure to the capsule, and with a brew chamber, the brew chamber having a first brew chamber part for holding the capsule and a second brew chamber part for closing the brew chamber, wherein the exchangeable capsule comprises a substantially rigid capsule body having a circumferential wall extending around an inner space of the capsule which is at least partially filled with a beverage ingredient suitable for preparing the beverage, the beverage ingredient comprising roast and ground coffee, and a base wall covering the inner space at a first end of the circumferential wall, which base wall in use of the capsule in the beverage preparation device is pierced by at least one knife of the fluid dispensing device for feeding the amount of fluid, the exchangeable capsule comprising a lid covering the inner space at a second end of the circumferential wall opposite the base wall, wherein the lid has a preformed outlet opening suitable for draining the prepared beverage from the inner space when the capsule is used in the beverage preparation device, with a membrane provided in the capsule inner space between the beverage ingredient and the lid, wherein the second brew chamber part comprises an extraction plate for engaging the exchangeable capsule at the second end of the circumferential wall when the brew chamber holding the capsule is closed, the extraction plate comprising a tearing surface for facing the lid of the capsule, wherein the lid of the exchangeable capsule in use in the closed brew chamber is not affected by the tearing surface, wherein the membrane comprises a layer of non-woven material, characterized in that said layer has a thickness in the range of 1.1 to 1.8 mm, an air permeability in the range of 100-700 mm/s at 200 Pa and a weight in the range of 300-600 g/m², wherein the capsule body, the lid, and the cover element are each mainly made from aluminum. As the lid of the capsule is not affected by the tearing surface of the extraction plate, e.g. no tears or holes are provided in the lid by the extraction plate, the preformed outlet opening in the lid of the capsule determines the rate of prepared beverage escaping from the capsule in use. By providing an outlet opening dimensioned to this end, a beverage can thus be prepared with the system without pressure build up or sudden pressure drop occurring in the fluid flow. Formation of a crema-layer on the prepared beverage is hereby reduced. The preformed outlet opening in the lid is closed by a cover element in order to keep a hermetic sealing of the inner space of the capsule for maintaining or prolonging a freshness of the beverage ingredient in the capsule during storage. Prior to use in the beverage preparation device the cover element may be easily removed to free the outlet opening, for instance by manually tearing the cover element from the capsule.

In a preferred embodiment of the system according to the invention the beverage preparation device comprises a brew chamber in which additionally a capsule with closed lid can be used for preparing a further beverage. For instance the system may comprise a beverage preparation device with a brew chamber in which a capsule having a closed lid, without preformed outlet opening, may be used to prepare an espresso type of coffee beverage having a crema layer. The capsule with closed lid may be a known prior art capsule, such as a known espresso type capsule used in known capsule beverage machines. The capsule with closed lid is preferably a capsule with a capsule body similar to the capsule according to the invention and with the lid without opening being attached to the capsule body. In the capsules with closed lid in use in the brew chamber the injection of water will increase the internal pressure. Due to the internal pressure the closed lid may bulge outwardly to contact the tearing surface of the extraction plate. The tearing surface of the extraction plate of the beverage preparation device may comprise or be formed by a plurality of relief elements in order to, in use, tear the bulging lid of such capsule to form an outflow opening through which the prepared coffee beverage may escape the capsule. As in the capsule according to the invention there is in use in the brew chamber no build up of pressure inside the inner space the lid with preformed opening does not, or at least not sufficiently, bulge for contacting the tearing surface. The extraction plate of the beverage preparation device and the lid of the capsules may thus be adapted to each other such that capsules with a closed lid tear on the extraction plate whereas capsules with a lid having the preformed outlet opening do not tear on the extraction plate. The system according to the invention thus allows for using both capsules with closed lid, for instance for the preparation of a coffee beverage with crema layer, such as an espresso coffee, and capsules with a lid with preformed opening, for preparing a coffee beverage without crema layer, such as a brewed coffee. In addition the system according to the invention allows for using capsules with a lid with preformed opening for preparing a tea, milk or chocolate based beverage.

The extraction plate can include relief elements of a first type and at least one relief element of a second type. The relief element of the second type may have a sharper edge than the relief elements of the first type.

The method of manufacturing a capsule suitable for preparing a beverage according to the invention comprises:
- providing a substantially rigid capsule body mainly made from aluminum having a circumferential wall extending around an inner space to be at least partially filled with a beverage ingredient suitable for preparing the beverage, the beverage ingredient comprising roast and ground coffee, and a base wall covering the inner space at a first end of the circumferential wall,
- filling the inner space with an amount of the beverage ingredient through an open filling side of the capsule body opposite the base wall,
- providing a membrane in the inner space after filling of the inner space with the beverage ingredient, wherein the membrane comprises a layer of non-woven material, said layer having a thickness in the range of 1.1 to 1.8 mm, an air permeability in the range of 100 - 700 mm/s at 200 Pa and a weight in the range of 300-600 g/m², and
- closing the open filling side by attaching a lid to the capsule body extending over the open filling side,
wherein the lid prior to the attachment to the capsule body is provided with an outlet opening through which in use a prepared beverage may flow out of the capsule, which outlet opening is fluid tightly closed by providing a removable cover element extending over the outlet opening and at least part of the lid.

In a preferred embodiment of the method of manufacturing a capsule according to the invention the removable cover element is attached to the lid prior to attaching the lid to the capsule.

In a further preferred embodiment of the method of manufacturing a capsule according to the invention a membrane is provided in the inner space after filling of the inner space with the beverage ingredient.

In a particularly preferred embodiment of the method of manufacturing a capsule according to the invention the membrane is attached to the lid prior to attaching the lid to the capsule.

### BRIEF DESCRIPTION OF THE DRAWING

These and other aspects of the present invention are hereinafter further elucidated by the appended drawing and corresponding embodiments, which form part of the present application. The drawing is not in any way meant to reflect a limitation of the scope of the invention, unless this is clearly and explicitly indicated. The exemplary embodiments are given by way of non-limitative illustration. It is noted that the figures are only schematic representations of embodiments of the invention that are given by way of non-limiting example.

In the drawing:
Figs. 1A and 1B show a perspective side view of a first embodiment of a capsule according to the invention in respectively a closed storage state with attached cover element and open use state with the cover element removed;
Fig. 2 shows a top view of an embodiment of the capsule according to the invention.
Fig. 3 shows a perspective side view of a second embodiment of the capsule according to the invention in a closed storage state with attached cover element.
Fig. 4 shows a schematic representation of a laminated assembly of a cover element, lid and membrane for use in a capsule according to the invention.

### DETAILED DESCRIPTION

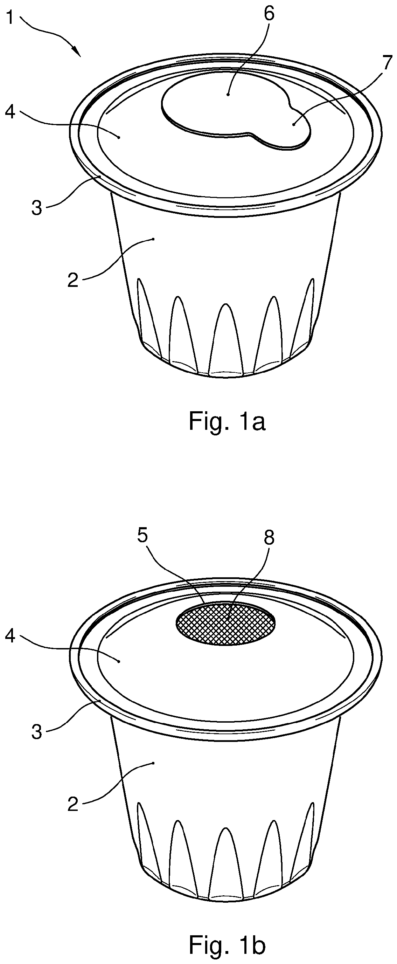

Figure 1A and 1B show a capsule according to the invention in a first embodiment. The capsule 1 comprises a capsule body 2. The body comprises a frusto-conical side wall extending around an inner space of the body. A base wall of the capsule body is connected to a first end of the side wall for closing off the inner space at the first end of the capsule body. A flange 3, also referred to as a rim, extends radially outwardly from a second end of the side wall. At the second end of the side wall the capsule body has an open filling side.

The capsule further includes a lid 4 that is attached to the flange 3 of the capsule body. The lid 4 is a relatively flexible sheet-like foil which is provided with a outflow opening 5 centrally located in the foil above the inner space. In the inner space a coffee bed of roast and ground coffee is provided. The weight of the coffee bed is in the range of 7-12 grams. In the storage state shown in fig. 1A the capsule 1 is hermetically closed to maintain a freshness of the coffee bed. The outlet opening 5 is fluid tightly closed by a cover element 6 which is attached to the lid 4. In a use state of the capsule shown in fig. 1B the cover element 6 is removed to free the outlet opening 5. For instance the cover element 6 may be manually removed from the lid by pulling on a pull tab 7 of the cover element 6. The base wall of the capsule body is further designed to be pierced open by piercing means of a beverage preparation device for supplying water under pressure into the capsule. A membrane 8 is provided in the inner space of the capsule between the coffee bed and the lid 4 below the preformed outflow opening 5. The capsule body 2, the lid 4, and the cover element 6 are each mainly made from aluminum. The lid 4, cover element 6 and membrane 8 prior to attachment to the capsule body 2 form a laminate with the cover element 6 attached to one side of the lid 4 extending over the preformed outlet opening, and the membrane 8 attached to the opposite side of the lid 4 extending over the preformed outlet opening.

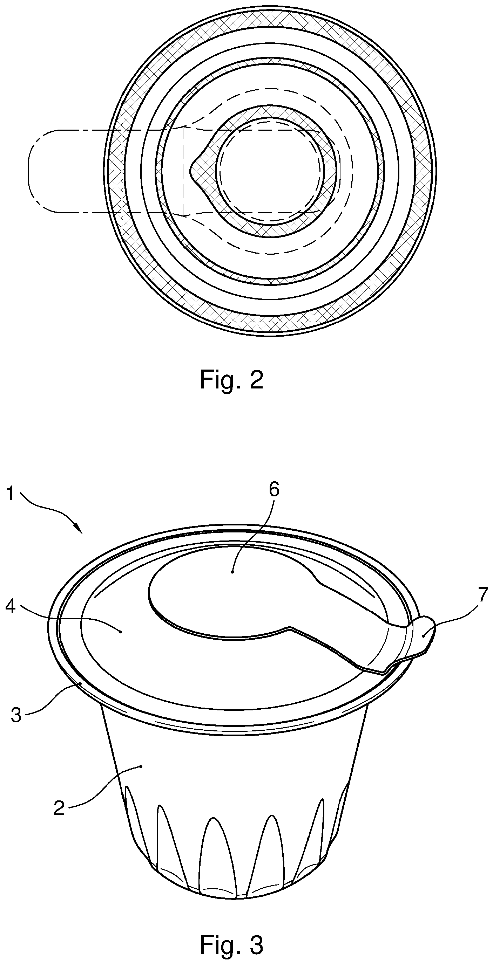

Figure 2 shows a top view of an embodiment of the capsule according to the invention in which a positioning of the lid, cover element, outlet opening and membrane with respect to each other is indicated. The outlet opening is provided in a central portion of the lid and has a circular shape. A diameter of the outlet opening may be between 6 - 20 mm, is preferably between 8 -14 mm and in a most preferred embodiment as shown in figure 2 a diameter of 12 mm. Further shown in figure 2 is that the cover element comprises a pull tab extending from the part of the cover element covering the outlet opening. The pull tab comprises a fold line for folding a loose part of the pull tab, i.e. part of the pull tab which is not attached to the lid, over part of the cover element attached to the lid and extending over the outlet opening.

Figure 3 shows a capsule according to the invention in a second embodiment, which capsule differs from the capsule shown in figure 1 in that the cover element 6 comprises a longer pull tab 7 extending from the part of the cover element 6 covering the outlet opening 5 to the flange or rim 3 of the capsule body. A free end part of the pull tab 7 is loose, i.e. not adhered to the lid, and angled with respect to a surface of the lid so that a user may manually grasp this part of the pull tab in order to easily remove the cover element 6 from the lid by tearing the cover element off.

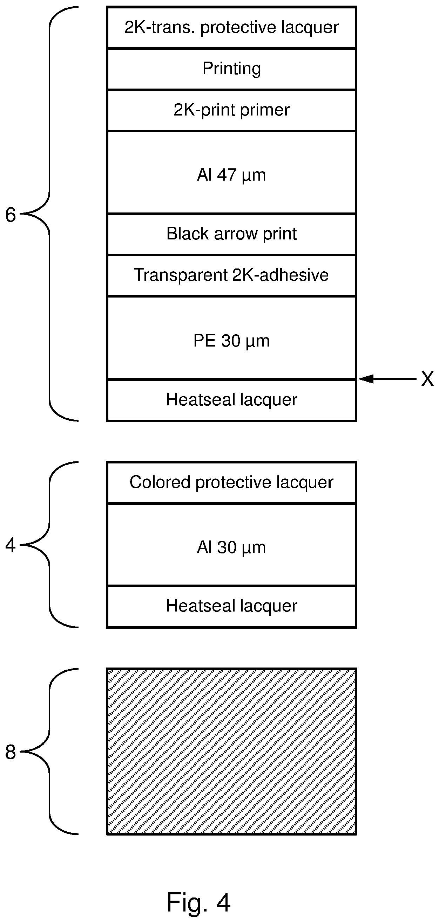

A detailed view of the laminated assembly of cover element, lid and membrane for use in a capsule according to the invention is shown in figure 4. The lid may be made of aluminum. The layer of aluminum may be in a range between 20-50 um and may particularly be between 30 um - 40 um thick. As shown in figure 3 the lid 4 mainly consists of a layer of aluminum with a thickness of 30um. On both sides of the aluminum layer a lacquer layer is applied. On a side of the aluminum layer facing the cover element the lacquer layer is a protective lacquer. On the opposite side of the aluminum layer the lacquer layer is a heat seal lacquer for attaching the lid to the membrane 8 of non-woven material by means of heat and pressure bonding.

The cover element 6 comprises a layer of aluminum with a thickness of between 40-60 um, and is preferably 47um thick as shown. On one side of the aluminum layer facing the lid a print is applied which may be at least in part be visible to the user to provide information indicating how to suitably remove the cover element from the lid, e.g. arrows indicating a pull direction. A transparent adhesive layer is provided on this print layer for adhering a layer of polyethylene (PE). The PE layer may be 20 -40 mm thick, and is preferably 30 mm thick as shown. The PE layer is lacquered with a heat seal lacquer for attaching the cover element 6 to the lid 4. The heat seal lacquer provides a weaker bond strength to the PE layer than to the aluminum lid, so that when a removal force is applied on the cover element, the cover element will tear at the PE layer and heat seal lacquer interface indicated with X. On the other side of the aluminum layer a print primer and further print layer is applied to provide an aesthetic finish to the cover element. A protective lacquer is provided at the visible outer surface of the cover element 6 facing away from the lid.

The membrane 8 comprises a layer of mainly polyester fibers with a thickness of 1.35 mm.

Herein, the invention is described with reference to specific examples of embodiments of the invention. It will, however, be evident that various modifications and changes may be made therein, without departing from the essence of the invention. For the purpose of clarity and a concise description features are described herein as part of the same or separate embodiments, however, alternative embodiments having combinations of all or some of the features described in these separate embodiments are also envisaged.

In the examples, the capsule body and lid are made of aluminum foil, preferable polymer coated aluminum foil to allow easy welding of the lid to the body. The skilled person will be capable of selecting the appropriate material taking into account the envisaged use with food material and any other relevant circumstances during use of the capsule. The thickness of the sheet or foil may be chosen such that a form stable capsule is provided. The thickness of the sheet or foil may vary with the nature of the material.

In the examples, the capsules are pierced by the piercing means. Such capsule can e.g. include an entrance filter.

In the examples, the capsule has an outwardly extending flange-like rim to which the lid is attached. It will be appreciated that it is possible that the capsule does not include an outwardly extending rim.

## Claims

1. Capsule for preparing a beverage comprising a substantially rigid capsule body having a circumferential wall extending around an inner space of the capsule which is at least partially filled with a beverage ingredient suitable for preparing the beverage, the beverage ingredient comprising roast and ground coffee, and a base wall covering the inner space at a first end of the circumferential wall, the capsule comprising a lid covering the inner space at a second end of the circumferential wall opposite the base wall, wherein a membrane is provided in the inner space of the capsule between the beverage ingredient and the lid, wherein the lid is provided with a preformed outlet opening suitable for draining the prepared beverage from the inner space when the capsule is used in a beverage preparation device, wherein the membrane extends at least over the surface of the outlet opening, which outlet opening is fluid tightly closed by a removable cover element extending over at least part of the lid, wherein the membrane comprises a layer of non-woven material, **characterized in that** said layer has a thickness in the range of 1.1 to 1.8 mm, an air permeability in the range of 100-700 mm/s at 200 Pa and a weight in the range of 300-600 g/m², wherein the capsule body, the lid, and the cover element are each mainly made from aluminum.

2. Capsule according to claim 1, wherein the cover element is attached to the lid, wherein preferably between the cover element and the lid a layer of adhesive material is provided suitable for a removable adhesion of the cover element to the lid, wherein preferably the layer of adhesive material is provided on a part of the cover element extending over the lid with a part of the cover element extending over the outlet opening in the lid being substantially free of adhesive material.

3. Capsule according to claim 2, wherein an adhesion strength between the layer of adhesive material and cover element is weaker than an adhesion strength between the layer of adhesive material and the lid.

4. Capsule according to any one of claims 2-3, wherein the adhesive material is a layer of heat-seal lacquer.

5. Capsule according to any one of the foregoing claims, wherein the lid at a circumferential edge is attached to the capsule body.

6. Capsule according to any one of the foregoing claims, wherein the membrane is attached to the lid, wherein preferably the membrane and lid are attached by means of a layer of adhesive material, preferably a heat-seal lacquer.

7. Capsule according to any one of the foregoing claims, wherein the cover element comprises a sheet like layer of aluminum, wherein preferably the cover element comprises a laminate of at least an aluminum layer and a plastic layer, particularly PE.

8. Capsule according to any one of the foregoing claims, wherein the lid substantially consists of a sheet like layer of aluminum.

9. Capsule according to any one of the foregoing claims, wherein the lid comprises on a side facing the cover element a layer of protective lacquer.

10. Capsule according to any one of the foregoing claims, wherein the cover element comprises a free pull tab protruding from part of the cover element covering the outlet opening.

11. Capsule according to any one of the foregoing claims, wherein the beverage ingredient comprises ground coffee in an amount of at least 7 grams.

12. System for preparing a beverage comprising an exchangeable capsule and a beverage preparation device with a fluid dispensing device capable of feeding an amount of a fluid, such as water, with a pressure between 8 -20 bar to the capsule, and with a brew chamber, the brew chamber having a first brew chamber part for holding the capsule and a second brew chamber part for closing the brew chamber, wherein the exchangeable capsule comprises a substantially rigid capsule body having a circumferential wall extending around an inner space of the capsule which is at least partially filled with a beverage ingredient suitable for preparing the beverage, the beverage ingredient comprising roast and ground coffee, and a base wall covering the inner space at a first end of the circumferential wall, which base wall in use of the capsule in the beverage preparation device is pierced by at least one knife of the fluid dispensing device for feeding the amount of fluid, the exchangeable capsule comprising a lid covering the inner space at a second end of the circumferential wall opposite the base wall, wherein the lid has a preformed outlet opening suitable for draining the prepared beverage from the inner space when the capsule is used in the beverage preparation device, with a membrane provided in the capsule inner space between the beverage ingredient and the lid, wherein the second brew chamber part comprises an extraction plate for engaging the exchangeable capsule at the second end of the circumferential wall when the brew chamber holding the capsule is closed, the extraction plate comprising a tearing surface for facing the lid of the capsule, wherein the lid of the exchangeable capsule in use in the closed brew chamber is not affected by the tearing surface, wherein the membrane comprises a layer of non-woven material, **characterized in that** said layer has a thickness in the range of 1.1 to 1.8 mm, an air permeability in the range of 100 - 700 mm/s at 200 Pa and a weight in the range of 300-600 g/m², wherein the capsule body, the lid, and the cover element are each mainly made from aluminum.

13. Method of manufacturing a capsule suitable for preparing a beverage, particularly a capsule as claimed in any one of claims 1 -11, wherein the method comprises:
- providing a substantially rigid capsule body mainly made from aluminum having a circumferential wall extending around an inner space to be at least partially filled with a beverage ingredient suitable for preparing the beverage, the beverage ingredient comprising roast and ground coffee, and a base wall covering the inner space at a first end of the circumferential wall,
- filling the inner space with an amount of the beverage ingredient through an open filling side of the capsule body opposite the base wall,
- providing a membrane in the inner space after filling of the inner space with the beverage ingredient, wherein the membrane comprises a layer of non-woven material, said layer having a thickness in the range of 1.1 to 1.8 mm, an air permeability in the range of 100 - 700 mm/s at 200 Pa and a weight in the range of 300-600 g/m², and
- closing the open filling side by attaching a lid mainly made from aluminum to the capsule body extending over the open filling side, wherein the lid prior to the attachment to the capsule body is provided with an outlet opening through which in use a prepared beverage may flow out of the capsule, which outlet opening is fluid tightly closed by providing a removable cover element mainly made from aluminum extending over the outlet opening and at least part of the lid, wherein preferably the removable cover element is attached to the lid prior to attaching the lid to the capsule, wherein preferably the membrane is attached to the lid prior to attaching the lid to the capsule.

## Patentansprüche

1. Kapsel zum Zubereiten eines Getränks, umfassend einen im Wesentlichen starren Kapselkörper, der eine Umfangswand aufweist, die sich um einen Innenraum der Kapsel erstreckt, der mindestens teilweise mit einem Getränkeinhaltsstoff gefüllt ist, der zum Zubereiten des Getränks geeignet ist, der Getränkeinhaltsstoff umfassend gerösteten und gemahlenen Kaffee, und eine Basiswand, die den Innenraum an einem ersten Ende der Umfangswand abdeckt, die Kapsel umfassend einen Deckel, der den Innenraum an einem zweiten Ende der Umfangswand gegenüber der Basiswand abdeckt, wobei eine Membran in dem Innenraum der Kapsel zwischen dem Getränkeinhaltsstoff und dem Deckel bereitgestellt ist, wobei der Deckel mit einer vorgeformten Auslassöffnung versehen ist, die zum Ablassen des zubereiteten Getränks aus dem Innenraum geeignet ist, wenn die Kapsel in einer Getränkezubereitungsvorrichtung verwendet wird, wobei sich die Membran mindestens über die Oberfläche der Auslassöffnung erstreckt, wobei die Auslassöffnung durch ein lösbares Abdeckelement fluidisch fest verschlossen ist, das sich über mindestens einen Teil des Deckels erstreckt, wobei die Membran eine Schicht aus Vliesmaterial umfasst,
**dadurch gekennzeichnet, dass** die Schicht eine Dicke in dem Bereich von 1,1 bis 1,8 mm, eine Luftdurchlässigkeit in dem Bereich von 100-700 mm/s bei 200 Pa und ein Gewicht in dem Bereich von 300-600 g/m² aufweist, wobei der Kapselkörper, der Deckel und das Abdeckelement jeweils überwiegend aus Aluminium gefertigt sind.

2. Kapsel nach Anspruch 1, wobei das Abdeckelement an dem Deckel befestigt ist, wobei vorzugsweise zwischen dem Abdeckelement und dem Deckel eine Schicht aus Klebematerial bereitgestellt ist, die für eine lösbare Anhaftung des Abdeckelements an dem Deckel geeignet ist, wobei vorzugsweise die Schicht aus Klebematerial auf einem Teil des Abdeckelements bereitgestellt ist, der sich über den Deckel erstreckt, wobei ein Teil des Abdeckelements, der sich über die Auslassöffnung in dem Deckel erstreckt, im Wesentlichen frei von Klebematerial ist.

3. Kapsel nach Anspruch 2, wobei eine Haftfestigkeit zwischen der Schicht aus Klebematerial und dem Abdeckelement schwächer als eine Haftfestigkeit zwischen der Schicht aus Klebematerial und dem Deckel ist.

4. Kapsel nach einem der Ansprüche 2 bis 3, wobei das Klebematerial eine Schicht aus Heißsiegellack ist.

5. Kapsel nach einem der vorstehenden Ansprüche, wobei der Deckel an einer Umfangskante an dem Kapselkörper befestigt ist.

6. Kapsel nach einem der vorstehenden Ansprüche, wobei die Membran an dem Deckel befestigt ist, wobei vorzugsweise die Membran und der Deckel mittels einer Schicht aus Klebematerial, vorzugsweise einem Heißsiegellack, befestigt sind.

7. Kapsel nach einem der vorstehenden Ansprüche, wobei das Abdeckelement eine bahnartige Schicht aus Aluminium umfasst, wobei vorzugsweise das Abdeckelement ein Laminat aus mindestens einer Aluminiumschicht und einer Kunststoffschicht, insbesondere PE, umfasst.

8. Kapsel nach einem der vorstehenden Ansprüche, wobei der Deckel im Wesentlichen aus einer bahnartigen Aluminiumschicht besteht.

9. Kapsel nach einem der vorstehenden Ansprüche, wobei der Deckel auf einer Seite, die dem Abdeckelement zugewandt ist, eine Schicht aus Schutzlack aufweist.

10. Kapsel nach einem der vorstehenden Ansprüche, wobei das Abdeckelement eine freie Ziehlasche umfasst, die von einem Teil des Abdeckelements vorsteht, der die Auslassöffnung abdeckt.

11. Kapsel nach einem der vorstehenden Ansprüche, wobei der Getränkeinhaltsstoff gemahlenen Kaffee in einer Menge von mindestens 7 Gramm umfasst.

12. System zum Zubereiten eines Getränks, umfassend eine auswechselbare Kapsel und eine Getränkezubereitungsvorrichtung mit einer Fluidabgabevorrichtung, die in der Lage ist, eine Menge eines Fluids, wie Wasser, mit einem Druck zwischen 8-20 Bar in die Kapsel zuzuführen, und mit einer Brühkammer, wobei die Brühkammer einen ersten Brühkammerteil zum Halten der Kapsel und einen zweiten Brühkammerteil zum Verschließen der Brühkammer aufweist, wobei die auswechselbare Kapsel einen im Wesentlichen starren Kapselkörper umfasst, der eine Umfangswand aufweist, die sich um einen Innenraum der Kapsel erstreckt, der mindestens teilweise mit einem Getränkeinhaltsstoff gefüllt ist, der zum Zubereiten des Getränks geeignet ist, wobei der Getränkeinhaltsstoff gerösteten und gemahlenen Kaffee umfasst, und eine Basiswand, die den Innenraum an einem ersten Ende der Umfangswand abdeckt, wobei die Basiswand bei Verwendung der Kapsel in der Getränkezubereitungsvorrichtung durch mindestens ein Messer der Fluidabgabevorrichtung durchstochen wird, um die Menge von Fluid zuzuführen, die auswechselbare Kapsel umfassend einen Deckel, der den Innenraum an einem zweiten Ende der Umfangswand gegenüber der Basiswand abdeckt, wobei der Deckel eine vorgeformte Auslassöffnung aufweist, die zum Ablassen des zubereiteten Getränks aus dem Innenraum geeignet ist, wenn die Kapsel in der Getränkezubereitungsvorrichtung verwendet wird, wobei eine Membran in dem Kapselinnenraum zwischen dem Getränkeinhaltsstoff und dem Deckel bereitgestellt ist, wobei der zweite Brühkammerteil eine Extraktionsplatte zum Ineingriffbringen der austauschbaren Kapsel an dem zweiten Ende der Umfangswand umfasst, wenn die Brühkammer, die die Kapsel hält, geschlossen ist, die Extraktionsplatte umfassend eine Reißoberfläche zum Gegenüberstehen mit dem Deckel der Kapsel, wobei der Deckel der austauschbaren Kapsel bei Verwendung in der geschlossenen Brühkammer nicht durch die Reißoberfläche beeinflusst wird, wobei die Membran eine Schicht aus Vliesmaterial umfasst, **dadurch gekennzeichnet, dass** die Schicht eine Dicke in dem Bereich von 1,1 bis 1,8 mm, eine Luftdurchlässigkeit in dem Bereich von 100-700 mm/s bei 200 Pa und ein Gewicht in dem Bereich von 300-600 g/m² aufweist, wobei der Kapselkörper, der Deckel und das Abdeckelement jeweils überwiegend aus Aluminium gefertigt sind.

13. Verfahren zum Herstellen einer Kapsel, die zum Zubereiten eines Getränks geeignet ist, insbesondere einer Kapsel nach einem der Ansprüche 1 bis 11, wobei das Verfahren umfasst:
- Bereitstellen eines im Wesentlichen starren Kapselkörpers, der hauptsächlich aus Aluminium gefertigt ist, der eine Umfangswand aufweist, die sich um einen Innenraum erstreckt, der mindestens teilweise mit einem Getränkeinhaltsstoff gefüllt ist, der zum Zubereiten des Getränks geeignet ist, der Getränkeinhaltsstoff umfassend gerösteten und gemahlenen Kaffee, und eine Basiswand, die den Innenraum an einem ersten Ende der Umfangswand abdeckt,
- Befüllen des Innenraums mit einer Menge des Getränkeinhaltsstoffes durch eine offene Einfüllseite des Kapselkörpers gegenüber der Basiswand,
- Bereitstellen einer Membran in dem Innenraum nach dem Befüllen des Innenraums mit dem Getränkeinhaltsstoff, wobei die Membran eine Schicht aus Vliesmaterial umfasst, die Schicht eine Dicke in dem Bereich von 1,1 bis 1,8 mm, eine Luftdurchlässigkeit in dem Bereich von 100-700 mm/s bei 200 Pa und ein Gewicht in dem Bereich von 300-600 g/m² aufweist, und
- Verschließen der offenen Einfüllseite durch das Befestigen eines Deckels, der hauptsächlich aus Aluminium gefertigt ist, an dem Kapselkörper, der sich über die offene Einfüllseite erstreckt, wobei der Deckel vor dem Befestigen an dem Kapselkörper mit einer Auslassöffnung versehen ist, durch die bei Verwendung ein zubereitetes Getränk aus der Kapsel fließen kann, wobei die Auslassöffnung fluidisch fest verschlossen ist, durch das Bereitstellen eines lösbaren Abdeckelements, das hauptsächlich aus Aluminium gefertigt ist, das sich über die Auslassöffnung und mindestens einen Teil des Deckels erstreckt, wobei vorzugsweise das lösbare Abdeckelement an dem Deckel vor dem Befestigen des Deckels an der Kapsel befestigt wird, wobei vorzugsweise die Membran an dem Deckel vor dem Befestigen des Deckel an der Kapsel befestigt wird.

## Revendications

1. Capsule de préparation d'une boisson comprenant un corps de capsule essentiellement rigide ayant une paroi circonférentielle s'étendant autour d'un espace intérieur de la capsule qui est au moins partiellement rempli d'un ingrédient de boisson adapté à la préparation de la boisson, l'ingrédient de boisson comprenant du café torréfié et moulu, et une paroi de base couvrant l'espace intérieur à une première extrémité de la paroi circonférentielle, la capsule comprenant un couvercle couvrant l'espace intérieur à une seconde extrémité de la paroi circonférentielle à l'opposé de la paroi de base, dans laquelle une membrane est prévue dans l'espace intérieur de la capsule entre l'ingrédient de boisson et le couvercle, dans laquelle le couvercle est pourvu d'une ouverture de sortie préformée adaptée à l'évacuation de la boisson préparée depuis l'espace intérieur lorsque la capsule est utilisée dans un dispositif de préparation de boisson, la membrane s'étendant au moins sur la surface de l'ouverture de sortie, laquelle ouverture de sortie est fermée de manière étanche au fluide par un élément de couverture amovible s'étendant sur au moins une partie du couvercle, la membrane comprenant une couche de matériau non tissé, **caractérisée en ce que** ladite couche a une épaisseur de l'ordre de 1,1 à 1,8 mm, une perméabilité à l'air de l'ordre de 100 à 700 mm/s à 200 Pa et un poids de l'ordre de 300 à 600 g/m, le corps de capsule, le couvercle et l'élément de couverture étant chacun principalement constitués d'aluminium.

2. Capsule selon la revendication 1, dans laquelle l'élément de couverture est fixé au couvercle, dans laquelle de préférence entre l'élément de couverture et le couvercle, une couche de matériau adhésif est prévue adaptée à une adhésion amovible de l'élément de couverture au couvercle, dans laquelle de préférence la couche de matériau adhésif est prévue sur une partie de l'élément de couverture s'étendant sur le couvercle avec une partie de l'élément de couverture s'étendant sur l'ouverture de sortie dans le couvercle étant essentiellement exempte de matériau adhésif.

3. Capsule selon la revendication 2, dans laquelle une force d'adhésion entre la couche de matériau adhésif et l'élément de couverture est plus faible qu'une force d'adhésion entre la couche de matériau adhésif et le couvercle.

4. Capsule selon l'une quelconque des revendications 2 à 3, dans laquelle le matériau adhésif est une couche de laque thermoscellée.

5. Capsule selon l'une quelconque des revendications précédentes, dans laquelle le couvercle au niveau d'un bord circonférentiel est fixé au corps de capsule.

6. Capsule selon l'une quelconque des revendications précédentes, dans laquelle la membrane est fixée au couvercle, dans laquelle de préférence la membrane et le couvercle sont fixés au moyen d'une couche de matériau adhésif, de préférence une laque thermoscellée.

7. Capsule selon l'une quelconque des revendications précédentes, dans laquelle l'élément de couverture comprend une couche d'aluminium semblable à une feuille, de préférence l'élément de couverture comprenant un stratifié composé d'au moins une couche d'aluminium et une couche de plastique, en particulier de PE.

8. Capsule selon l'une quelconque des revendications précédentes, dans laquelle le couvercle est essentiellement constitué d'une couche d'aluminium semblable à une feuille.

9. Capsule selon l'une quelconque des revendications précédentes, dans laquelle le couvercle comprend, sur un côté faisant face à l'élément de couverture, une couche de laque protectrice.

10. Capsule selon l'une quelconque des revendications précédentes, dans laquelle l'élément de couverture comprend une tirette libre faisant saillie depuis une partie de l'élément de couverture couvrant l'ouverture de sortie.

11. Capsule selon l'une quelconque des revendications précédentes, dans laquelle l'ingrédient de boisson comprend du café moulu dans une quantité d'au moins 7 grammes.

12. Système de préparation d'une boisson comprenant une capsule échangeable et un dispositif de préparation de boisson avec un dispositif de distribution de fluide capable d'alimenter la capsule avec une quantité de fluide, tel que de l'eau, à une pression comprise entre 8 et 20 bars, et avec une chambre de brassage, la chambre de brassage ayant une première partie de chambre de brassage permettant de maintenir la capsule et une seconde partie de chambre de brassage permettant de fermer la chambre de brassage, dans laquelle la capsule échangeable comprend un corps de capsule essentiellement rigide ayant une paroi circonférentielle s'étendant autour d'un espace intérieur de la capsule qui est au moins partiellement rempli d'un ingrédient de boisson adapté à la préparation de la boisson, l'ingrédient de boisson comprenant du café torréfié et moulu, et une paroi de base couvrant l'espace intérieur à une première extrémité de la paroi circonférentielle, laquelle paroi de base lors de l'utilisation de la capsule dans le dispositif de préparation de boisson est percée par au moins un couteau du dispositif de distribution de fluide permettant d'alimenter la quantité de fluide, la capsule échangeable comprenant un couvercle couvrant l'espace intérieur à une seconde extrémité de la paroi circonférentielle à l'opposé de la paroi de base, dans laquelle le couvercle a une ouverture de sortie préformée adaptée à l'évacuation de la boisson préparée depuis l'espace intérieur lorsque la capsule est utilisée dans le dispositif de préparation de boisson, avec une membrane prévue dans l'espace intérieur de capsule entre l'ingrédient de boisson et le couvercle, la seconde partie de chambre de brassage comprenant une plaque d'extraction permettant d'engager la capsule échangeable à la seconde extrémité de la paroi circonférentielle lorsque la chambre de brassage maintenant la capsule est fermée, la plaque d'extraction comprenant une surface de déchirement permettant de faire face au couvercle de la capsule, dans laquelle le couvercle de la capsule échangeable utilisé dans la chambre de brassage fermée n'est pas affecté par la surface de déchirement, dans laquelle la membrane comprend une couche de matériau non tissé, **caractérisée en ce que** ladite couche a une épaisseur de l'ordre de 1,1 à 1,8 mm, une perméabilité à l'air de l'ordre de 100 à 700 mm/s à 200 Pa et un poids de l'ordre de 300 à 600 g/m², le corps de capsule, le couvercle et l'élément de couverture étant chacun principalement constitués d'aluminium.

13. Procédé de fabrication d'une capsule adaptée à la préparation d'une boisson, en particulier une capsule selon l'une quelconque des revendications 1 à 11, dans lequel le procédé comprend :
- la fourniture d'un corps de capsule essentiellement rigide principalement constitué d'aluminium ayant une paroi circonférentielle s'étendant autour d'un espace intérieur destiné à être au moins partiellement rempli d'un ingrédient de boisson adapté à la préparation de la boisson, l'ingrédient de boisson comprenant du café torréfié et moulu, et une paroi de base couvrant l'espace intérieur à une première extrémité de la paroi circonférentielle,
- le remplissage de l'espace intérieur avec une quantité de l'ingrédient de boisson à travers un côté de remplissage ouvert du corps de capsule à l'opposé de la paroi de base,
- la fourniture d'une membrane dans l'espace intérieur après le remplissage de l'espace intérieur avec l'ingrédient de boisson, dans laquelle la membrane comprend une couche de matériau non tissé, ladite couche ayant une épaisseur de l'ordre de 1,1 à 1,8 mm, une perméabilité à l'air de l'ordre de 100 à 700 mm/s à 200 Pa et un poids de l'ordre de 300 à 600 g/m², et
- la fermeture du côté de remplissage ouvert en fixant un couvercle principalement constitué d'aluminium au corps de capsule s'étendant sur le côté de remplissage ouvert, dans lequel le couvercle avant la fixation au corps de capsule est pourvu d'une ouverture de sortie à travers laquelle lors de son utilisation une boisson préparée peut s'écouler de la capsule, laquelle ouverture de sortie est fermée de manière étanche au fluide par la fourniture d'un élément de couverture amovible principalement constitué d'aluminium s'étendant sur l'ouverture de sortie et au moins une partie du couvercle, de préférence l'élément de couverture amovible étant fixé au couvercle avant la fixation du couvercle à la capsule, la membrane étant de préférence fixée au couvercle avant la fixation du couvercle à la capsule.
